(19) Europäisches Patentamt
European Patent Office
Office européen des brevets

(11) EP 0 917 548 B1

(12) FASCICULE DE BREVET EUROPEEN

(45) Date de publication et mention de la délivrance du brevet:
**12.06.2002 Bulletin 2002/24**

(21) Numéro de dépôt: **97936745.5**

(22) Date de dépôt: **06.08.1997**

(51) Int Cl.[7]: **C08G 77/38**, C08G 77/392

(86) Numéro de dépôt international:
**PCT/FR97/01458**

(87) Numéro de publication internationale:
**WO 98/05700 (12.02.1998 Gazette 1998/06)**

# (54) PROCEDE DE FABRICATION DE POLYORGANOSILOXANES (POS) MULTIFONCTIONNELS, PAR DESHYDROGENOCONDENSATION ET HYDROSILYLATION

VERFAHREN ZUR HERSTELLUNG VON MULTIFUNKTIONELLEN POLYORGANOSILOXANEN (POS) MITTELS DEHYDROGENIERUNGS-KONDENSATION UND HYDROSILYLIERUNG

METHOD FOR MANUFACTURING MULTIFUNCTIONAL POLYORGANOSILOXANES (POS), BY DEHYDROGENOCONDENSATION AND HYDROSILYLATION

(84) Etats contractants désignés:
**AT BE CH DE DK ES FI FR GB GR IE IT LI LU NL PT SE**

(30) Priorité: **06.08.1996 FR 9610086**

(43) Date de publication de la demande:
**26.05.1999 Bulletin 1999/21**

(73) Titulaire: **RHODIA CHIMIE**
**92408 Courbevoie Cédex (FR)**

(72) Inventeurs:
- **PRIOU, Christian**
**F-69100 Villeurbanne (FR)**
- **VIOLLAND, Robert**
**F-69008 Lyon (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 632 085**
**WO-A-94/26806**
**WO-A-96/16125**
**WO-A-96/16126**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

Le domaine de l'invention est celui de la fonctionnalisation de silicones, en particulier de polyorganosiloxanes, linéaires ou cycliques, constitués de motifs M, D, T et, éventuellement, Q.

Les POS à fonctionnaliser, auxquels on s'intéresse plus spécifiquement dans le cadre de l'invention, sont des polyorganohydrogénosiloxanes, linéaires ou cycliques. Ce sont les groupements SiH de ces POS qui servent de points d'accrochage, aux fonctionnalités destinées à substituer ces POS, pour leur conférer des propriétés spécifiques, par exemple, d'anti-adhérence, de lubrification ou de compatibilisation ..., autant de propriétés recherchées dans les applications diverses et variées des silicones.

La présente invention concerne la fabrication, à l'échelle industrielle, de ces POS multifonctionnels. Dans un tel contexte, il est évident que les modes de fonctionnement en continu ou semi-continu s'accommodent mieux aux impératifs industriels de rentabilité et de productivité, que le mode discontinu.

Le principe même de la mufti-fonctionnalisation de POS est décrit dans la demande de brevet internationale antérieure PCT WO 96/16 125. Ce document divulgue la préparation d'un POS II à fonctionnalité Si-OEt et Si-H, par déshydrogénocondensation de polyméthylhydrogénosiloxane $\alpha$-$\omega$-$Si(Me)_3$ comportant, par exemple, 50 motifs $MeSiHO_{2/2}$. A la place de la fonctionnalité éthoxy, d'autres alcoxyles sont envisagés, comme, e. g., l'isopropoxy.

La déshydrogénocondensation s'effectue par mise en présence du POS (I) à SiH, avec un alcool précurseur de la fonctionnalité alcoxy, en présence d'un catalyseur à base de platine.

A l'issue de cette déshydrogénocondensation, une fraction des SiH de départ se trouve substituée par un reste alcoxyle.

Le POS (II) ainsi obtenu est alors soumis à une hydrosilylation d'une oléfine, telle que l'octène, par les SiH restants et en présence du catalyseur au platine de départ.

Il a ainsi pu être observé que la déshydrogénocondensation de POS (I) à SiH, avec de l'alcool en excès et en présence d'un catalyseur au platine, ralentit très fortement aux alentours de 66 % de taux de transformation.

Confrontée au problème de l'industrialisation de ce procédé de multifonctionnalisation de POS à groupements SiH, la demanderesse a eu à faire face à un certain nombre de difficultés technologiques et techniques, qui vont être évoquées ci-après.

Le cahier des chargés général d'un procédé industriel de fabrication de POS multifonctionnalisés, comprend au moins quatre exigences majeures : la productivité et la rentabilité, la qualité des produits finis, la sécurité et la simplicité de mise en oeuvre.

S'agissant de la productivité et de la rentabilité il est clair, comme déjà indiqué ci-dessus, qu'un mode de fonctionnement continu, voire semi-continu, doit être envisagé.

L'un des facteurs déterminants de la qualité des POS multifonctionnalisés considérés, repose sur la maîtrise du taux de transformation des SiH par déshydrogénocondensation (taux de substitution par un premier type de fonctionnalité). Dans le cas où l'on utilise l'alcool comme réactif de déshydrogénocondensation, il importe de contrôler le degré d'alcoxylation partielle, de manière à assurer sa reproductibilité. Le seul art antérieur proche à cet égard, à savoir la demande PCT WO 96/16 125, ne fournit aucune solution (ni même de début de solution), car les exemples qu'elle donne sont des essais de laboratoire réalisés, de manière discontinue, dans des ballons tricol de 500 ml.

L'aspect sécurité industrielle est également très contraignant dans ce procédé de multifonctionnalisation, et ce pour plusieurs raisons. La première est que le dégagement d'hydrogène propre à la déshydrogénocondensation est une menace patente qu'il convient de juguler. La seconde vient du fait que l'intermédiaire réactionnel POS (II) à Si-OR et à Si-H (réactif = alcool) est une huile qui contient une proportion importante de SiH, en présence de catalyseur au platine encore actif. Il s'agit là d'un mélange potentiellement dangereux car on ne peut écarter le fait que la réaction reparte et produise ainsi, de manière inopinée et incontrôlée, de l'hydrogène, lequel représente, dans de telles conditions, un risque élevé.

Il existe encore une difficulté technique supplémentaire liée aux phénomènes de moussage intense, induits par l'hydrogène produit lors de la déshydrogénocondensation.

Les exemples de procédé de multifonctionnalisation de POS à SiH, tels que donnés dans l'art antérieur le plus proche WO 96/16 125, sont des essais discontinus de laboratoire, qui ne prennent pas en compte les préoccupations industrielles exposées ci-dessus.

Dans cet état de fait, l'un des objectifs essentiels de la présente invention est de perfectionner le procédé de multifonctionnalisation de POS décrit dans le WO 96/16 125 pour en faire un procédé **industriel** de fabrication de POS multifonctionnels par déshydrogénocondensation/hydrosilylation, respectant des exigences de rentabilité et de productivité, de qualité de produit fini, de sécurité et, enfin, de simplicité de mise en oeuvre, ledit procédé faisant appel pour sa mise en oeuvre à un dispositif de fabrication industrielle se devant d'être économique, fiable, performant et adapté au procédé de fabrication susvisé.

Ces objectifs, parmi d'autres, sont atteints par la présente invention qui conceme un procédé de fabrication en continu ou en semi-continu de polyorganosiloxanes (POS) multifonctionnels (III), à partir de POS (I) comprenant

des groupements SiH et selon un mécanisme réactionnel faisant intervenir une déshydrogénocondensation permettant la fonctionnalisation dudit POS (I) par la fonctionnalité ($Fo_1$) et une hydrosilylation d'au moins un composé insaturé précurseur d'une fonctionnalité ($Fo_2$) sur le POS (III),

→ ledit procédé faisant appel pour sa mise en oeuvre à un dispositif de fabrication industrielle adapté grâce auquel les opérations suivantes sont réalisées :

- alimenter en continu au moins un réacteur A continu avec :
  - au moins un POS (I) à groupement SiH,
  - au moins un réactif (HXR) fonctionnel à hydrogène mobile consistant dans un alcool et/ou un thiol (X = O ou S), ledit réactif pouvant être en excès par rapport à (I),
  - et un catalyseur comprenant un produit choisi parmi les métaux de transition,

  ledit réacteur A étant le siège d'une déshydrogénocondensation conduisant, notamment :

  - à un POS (II) comprenant des groupements SiH résiduels et des groupements $SiFo_1$ ($Fo_1$ = XR),
  - à du réactif HXR,
  - et à un gaz comportant de l'hydrogène et, éventuellement, du réactif HXR gazeux,

- évacuer et récupérer en continu, hors du réacteur A, du gaz contenant de l'hydrogène dès sa formation, et éventuellement, dans le cas où le produit par la déshydrogénocondensation comprend, outre l'hydrogène, du HXR sous forme vapeur, le soumettre à un traitement de séparation de l'$H_2$ des vapeurs d'HXR,
- éventuellement recueillir le milieu réactionnel liquide dès lors que celui-ci contient du POS II à groupements $SiH/SiFo_1$ et le catalyseur,
- transférer ledit milieu réactionnel liquide, du réacteur A à au moins un réacteur B d'hydrosilylation d'au moins un composé fonctionnel insaturé par les SiH résiduels du POS (II), de façon à obtenir le POS (III) à groupements $SiFo_1$ et $SiFo_2$,
- laisser se dérouler l'hydrosilylation susvisée, et
- récupérer le POS (III) à groupements $SiFo_1/SiFo_2$ ainsi formé,

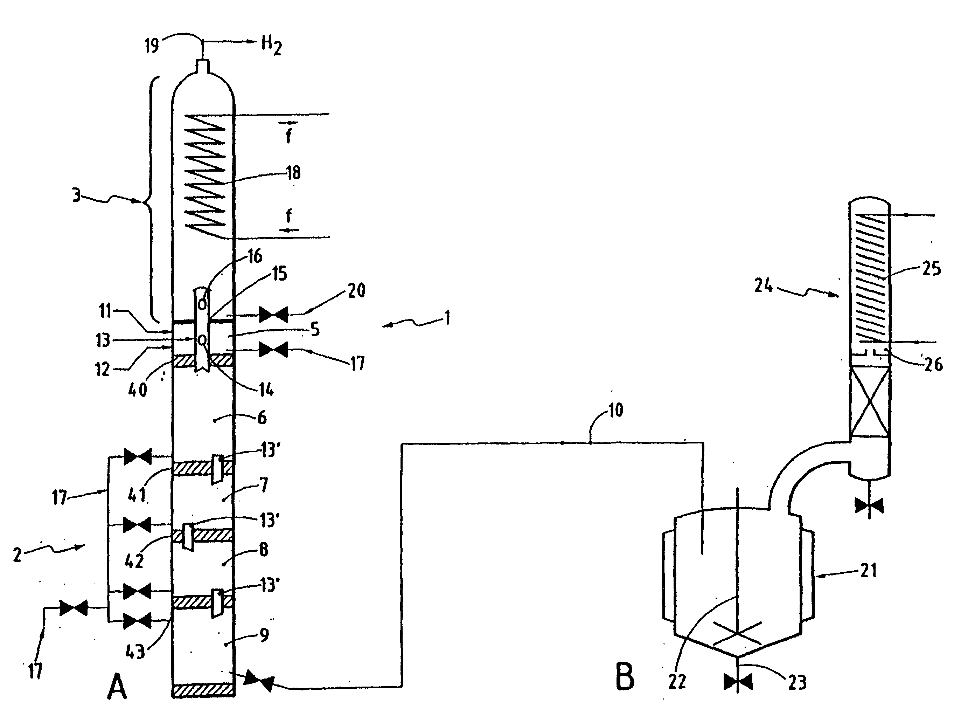

→ ledit procédé étant caractérisé en ce que le dispositif pour la mise en oeuvre présente les particularités suivantes, en référence à la figure unique annexée :

- il comprend au moins un réacteur A qui comprend une enceinte (**1**) comportant :
  - d'une part, au moins une chambre basse réactionnelle (**2**) pourvue d'au moins un plateau (**40**) constituant le fond d'un compartiment principal (**5**) destiné à servir de siège à au moins une partie de la déshydrogénocondensation,
  - et, dautre part, une chambre haute **(3)** appartenant aux moyens d'évacuation et de récupération rapides du gaz et contenant les éventuels moyens **(18)** de séparation de l'hydrogène,

- le compartiment principal (**5**) est celui dans lequel débouché la (ou les) conduit(s) d'alimentation (**11, 12**) en réactifs de départ consistant dans le POS (I), le réactif HXR et le catalyseur,
- ledit compartiment (**5**) est équipé d'au moins un organe (**13**) de type trop-plein déterminant un niveau donné pour le milieu réactionnel liquide dans le compartiment (**5**), ledit trop-plein **(13)** mettant en communication ce dernier avec le niveau inférieur de la chambre basse (**2**), là ou se situe(nt) une (ou des) canalisation(s) de transfert (**10**) du POS (II) à groupements $SiH/SiFo_1$ d'un réacteur A dans au moins un réacteur B d'hydrosilylation pourvu :
  - de moyens de récupération (**24**) des évents gazeux pouvant être combinés à un équipement (**25**) de traitement des évents pour séparer l'hydrogène des autres gaz,
  - et éventuellement de moyens d'agitation (**22**) du milieu réactionnel d'hydrosilylation,

- et ce compartiment principal (**5**) est en relation, par sa partie supérieure, avec la chambre haute (**3**).

Il est du mérite de la demanderesse d'avoir pu mettre en évidence, après de longues et laborieuses recherches, que le problème de l'industrialisation d'un multi-focntionnalisation de POS passait par la réalisation d'une déshydrogénocondensation en continu, en prévoyant une évacuation et une récupération instantanées et continues de l'hydrogène dès sa formation et, par ailleurs, en évacuant, le plus tôt possible et le plus rapidement possible, l'intermédiaire POS (II) dangereux vers l'autre réacteur B d'hydrosilylation pour le neutraliser et le rendre inoffensif. En d'autres termes, on élimine l'hydrogène et on consomme l'intermédiaire réactionnel (II) au fur et à mesure de leur formation.

Ces modalités avantageuses de procédé sont des gages :

- de productivité/rentabilité → fonctionnement continu,
- de qualité → maîtrise du taux de transformation du POS (I) en POS (II),
- de sécurité → limitation maximale du risque hydrogène,
- et de simplicité de fonctionnement.

Le procédé selon l'invention permet, incidemment, d'évacuer commodément la chaleur de réaction, tout en maîtrisant bien la température de la masse réactionnelle.

L'évacuation massive d'hydrogène qu'il préconise apporte une solution au problème de moussage rédhibitoire.

Un autre avantage de l'invention, et non des moindres, tient à l'économie de ce procédé.

Les avantages et des variantes de réalisation du procédé selon l'invention ressortiront de la description qui suit, faite en référence à la **figure unique** annexée qui est une représentation schématique d'un mode de réalisation du dispositif de fabrication en continu de POS multifonctionnels par déshydrogénocondensation/hydrosilylation.

Le dispositif représenté comprend un réacteur A continu de déshydrogénocondensation et un réacteur B discontinu ("batch") d'hydrosilylation. Selon des variantes, le dispositif représenté peut comprendre plusieurs réacteurs B fonctionnant, soit en semi-continu (séquences réaction/vidange alternées), soit en continu, ou bien encore un seul réacteur B conçu pour fonctionner en continu.

Le réacteur A est, essentiellement, constitué par une enceinte **1**, en forme générale de colonne cylindrique creuse. Cette colonne se subdivise, d'une part, en au moins une - en l'occurrence une - chambre basse réactionnelle **2** et, d'autre part, en une chambre haute **3** appartenant aux moyens d'évacuation et de récupération rapide du gaz et contenant les éventuels moyens de séparation de l'hydrogène.

La chambre basse **2** est pourvue d'au moins un - en l'occurence un - plateau **40** constituant le fond d'un compartiment principal **5,** destiné à servir de siège à au moins une partie de la déshydrogénocondensation du POS (I).

Conformément à une caractéristique avantageuse de l'invention, la chambre basse 2 est du type à multi-étages et comporte au moins un autre étage inférieur - de préférence un à trois et, en l'espèce trois - en plus de celui correspondant au compartiment principal **5.** Chaque étage inférieur comprend un fond, formé par au moins un - en l'occurence un - plateau **41, 42, 43,** définissant, avec le fond de l'étage vicinal supérieur, un compartiment **6, 7** et **8** respectivement, pour les plateaux **41, 42**, **43.** Ces plateaux **40** à **43** sont, en fait, des cloisons transversales délimitant les compartiments **5** à **8,** le plateau **43** définissant, en outre avec le fond de la colonne **1,** un culot **9,** utile comme réceptacle de recueil du milieu réactionnel liquide contenant du POS (II) et relié au réacteur B par au moins une canalisation de transfert **10.** Chaque plateau **40, 41, 42, 43** comprend au moins un organe de trop-plein (**13**, **13')** (en l'espèce un) permettant le réglage du niveau de liquide réactionnel. La référence **13** désigne le trop-plein du plateau **40** (compartiment principal **5**). Les références **13'** désignent les trop-plein des plateaux **41, 42, 43** (compartiments inférieurs **6, 7** et **8).**

Le compartiment principal **5** est celui dans lequel débouche la (ou les) conduit(s) d'alimentation **11** et **12** en réactifs. L'organe de trop-plein **13,** équipant ce compartiment principal **5**, détermine un niveau donné pour le milieu réactionnel liquide dans le compartiment **5.** Ce trop-plein **13** met en communication le compartiment **5** avec le niveau inférieur de la chambre basse **2,** là où se situe la canalisation de transfert **10.** Dans le présent exemple, ce niveau inférieur de la chambre basse **2** correspond au culot **9,** qui est séparé du compartiment principal **5** par trois compartiments inférieurs **6, 7, 8.** En outre, le compartiment principal **5** est en relation, par sa partie supérieure, avec la chambre haute **3.**

L'alimentation en milieu réactionnel liquide du compartiment principal **5** peut s'effectuer en continu par l'intermédiaire des conduits d'alimentation **11** et **12.** Ces derniers permettent d'acheminer en continu, par exemple, le POS (I) et le réactif HXR (e. g. alcool). Pour détailler un peu plus le procédé selon l'invention, on peut indiquer que l'on alimente, de préférence, le réacteur A sensiblement simultanément en POS (I) à SiH et en réactif fonctionnel HXR, le catalyseur étant compris dans le POS (I) et/ou le réactif HXR. Avantageusement, on privilégie, en pratique, la mise en oeuvre d'une solution de catalyseur dans le réactif HXR.

Une telle alimentation simultanée en POS (I) et en réactif à hydrogène mobile - tel qu'un alcool (éthanol) - permet d'améliorer la sécurité car on peut ainsi contrôler et tempérer les soubresauts de la réaction et le dégagement d'hydrogène y associé.

Pour optimiser la cinétique de la réaction de déshydrogénocondensation, on prévoit, idéalement, un préchauffage d'au moins l'un des réactifs de départ, à savoir: POS(I), HXR et catalyseur, à une température comprise entre 30 et 100 °C, de préférence entre 40 et 80 °C.

Ces réactifs se déversent sur le plateau **40,** lequel est traversé par l'organe de trop-plein **13** formé par un tube cylindrique percé d'un orifice **14,** au travers duquel l'excès de milieu réactionnel liquide peut être évacué et acheminé dans le compartiment inférieur **6.** Ce tube **13** de trop-plein est axial par rapport à l'enceinte **1** du réacteur A et, de préférence, se prolonge vers le haut, pour mettre en communication le compartiment **5** avec la chambre haute **3.** Pour ce faire, le tube **13** s'étend au travers d'une cloison **15** de séparation. La partie supérieure du tube **13,** émergeant dans la chambre haute **3** au-dessus de la cloison **15,** est pourvue d'une ouverture **16.** Ce tube **13** permet l'évacuation rapide, dans la chambre haute **3,** du gaz formé dans le compartiment principal **5.**

Ce tube **13** peut, éventuellement, être équipé d'au moins une valve anti-retour en lieu et place de l'orifice **16.** Conformément à l'invention, on peut prévoir un ou plusieurs tubes **13** d'acheminement des gaz du compartiment **5** vers la chambre haute **3.**

Les autres organes de trop-plein **13',** équipant les plateaux **41, 42** et **43,** sont également constitués par des tubes cylindriques dont les axes ne sont pas alignés entre eux. La hauteur de la partie de chaque tube **13',** qui s'élève à partir du fond **41, 42, 43,** détermine le niveau du trop-plein de liquide réactionnel au-delà duquel ce dernier s'écoulera dans l'étage inférieur. Ainsi, chaque compartiment inférieur **6, 7, 8,** de même que le culot **9,** est destiné à être alimenté en milieu réactionnel liquide par l'intermédiaire du trop-plein **13, 13'** de l'étage immédiatement supérieur. Le fond de l'étage **8** le plus bas communique, par son trop-plein **13',** avec le culot **9** du réacteur A, de manière à permettre le recueil du POS (II). On peut régler, à volonté, le temps de séjour du milieu réactionnel liquide dans chaque compartiment, en jouant sur les niveaux de soutirage des différents plateaux **40, 41, 42, 43.**

Des conduites de vidange **17** sont raccordées à la partie basse de chaque compartiment **5, 6, 7, 8.** Ces conduites **17** comprennent des vannes représentées symboliquement sur le dessin mais non référencées.

S'agissant de la chambre haute **3,** elle est délimitée verticalement par la cloison **15** de séparation avec la chambre basse **2** et par le haut de la colonne **1** du réacteur **A**. Il convient de signaler qu'elle appartient aux moyens d'évacuation et de récupération rapides du gaz se dégageant de la chambre basse **2** en cours de fonctionnement. Ce gaz passe ensuite, successivement, par l'orifice **14,** la lumière et l'ouverture **16** du tube **13.**

Conformément à une autre caractéristique avantageuse de l'invention, cette chambre haute **3** comprend des moyens **18** de séparation de l'hydrogène des autres composants du gaz produit lors de la déshydrogénocondensation. En pratique, ces autres composants sont des vapeurs de composés volatils à base de réactif HRX (e. g. alcool = réactif à hydrogène mobile). Les moyens **18** sont donc, avantageusement, constitués par au moins un condenseur - en l'espèce un - symbolisé par un serpentin dans la chambre haute **3** et alimenté en fluide frigorigène selon un flux indiqué par les flèches **f** représentées sur le dessin.

Ce dernier montre également, de manière schématique, une conduite 19 d'évacuation de l'hydrogène séparé des vapeurs de volatils. Cette conduite **19** est connectée à la partie supérieure de la colonne **1.**

Conformément à une autre caractéristique de l'invention, le dispositif pour la mise en oeuvre du procédé selon l'invention comprend des moyens de détermination en continu du taux de substitution des SiH, de façon à permettre la régulation de celui-ci. Ces moyens sont, de préférence, essentiellement constitués par au moins un compteur à hydrogène, avantageusement associés à une unité de calcul. De tels moyens, non référencés et non représentés, peuvent être prévus sur (ou mis en relation avec) la conduite **19** et ils peuvent être reliés à un système d'asservissement et de régulation en continu du taux de substitution, également dénommé taux de transformation. Ce système d'asservissement pourrait, par exemple, assurer la régulation en agissant sur les débits d'alimentation et/ou sur les temps de séjour dans les différents étages en modifiant les hauteurs de débordement de chaque trop-plein **13, 13'.**

Conformément à l'invention, l'un des points clés, permettant d'assurer la reproductibilité du taux de transformation du POS (I) en POS (II) et la minimisation du risque potentiel lié à ce POS (II) instable, passe :

- par la mise en oeuvre de la réaction de déshydrogénocondensation dans le réacteur A continu,
- par l'instauration d'un temps de séjour juste suffisant pour obtenir le taux de transformation souhaité,
- et par la régulation de la cinétique réactionnelle par asservissement des paramètres opératoires du procédé (alimentation en réactifs, température...).

Ce temps de séjour dépend directement du moment de transfert du POS (II) dans le réacteur B. Aussi, selon une caractéristique préférée de l'invention, on mesure et/ou calcule le taux de substitution des SiH par $Fo_1$ et on effectue le transfert du POS (II) du réacteur A de déshydrogéno-condensation au réacteur B d'hydrosilylation, dès lors que le taux de substitution des SiH par $Fo_1$, exprimé en % molaire, est supérieur ou égal à 45, de préférence à 55 et, plus préférentiellement encore, est compris entre 60 et 70. C'est là l'un des moyens dont on dispose, parmi d'autres, pour régler le taux de substitution.

Dans le cadre de l'asservissement propre au procédé selon l'invention, le suivi du taux de substitution ou taux de transformation peut, avantageusement, se faire au travers de la mesure de l'hydrogène dégagé. Le débit ainsi

mesuré permet d'accéder, par le calcul, directement au taux de substitution. Une alternative serait de mettre en place une analyse en continu du POS (II).

En tout état de cause, la connaissance instantanée du taux de substitution permet de le réguler en jouant sur les paramètres de fonctionnement, notamment sur le temps de séjour du POS (I) et (II) dans le réacteur A et/ou sur la température réactionnelle et/ou sur les débits d'alimentation en POS (I), en réactif fonctionnel HXR et en catalyseur.

Le condensat, produit grâce au condenseur **18,** est récupéré dans le fond de la chambre basse **3,** constitué par la cloison **15.** Ce condensat peut être soutiré du culot de cette chambre **3** par l'intermédiaire d'une canalisation **20** reliée à un réservoir de stockage et/ou à un circuit de recyclage dudit condensat dans la réaction de déshydrogéno-condensation (réactif à hydrogène mobile = HXR = alcool e. g.). Dans une telle variante de recyclage du condensat, la canalisation **20** de soutirage serait alors connectée au compartiment principal **5**, de manière à permettre l'alimentation de celui-ci en HXR récupéré. Cette variante correspond à une modalité préférée du procédé et du dispositif selon l'invention. Selon une autre variante de l'invention, le fond (ou la cloison) **15** est supprimé. Dans ces conditions, le condensat d'HXR récupéré est directement collecté dans le compartiment principal **5** sur le plateau **40**.

Le fait de prévoir une condensation des vapeurs de volatils, issues du stripping induit par le départ d'hydrogène, permet d'évacuer les calories de la réaction. Cette évacuation calorifique s'opère au travers de la vaporisation du réactif volatil alimenté en continu et au travers de la condensation elle-même, sachant qu'en outre le condensat de réactif récupéré est recyclé. Le système est simple et autorégulateur. Ainsi, la température réactionnelle est régulée par exemple à 70-71 °C environ. Cette régulation est un autre facteur important pour la stabilisation du taux de transformation des POS (I) en POS (II), à la valeur quasi-asymptotique de 66 % environ.

Un tel réacteur A continu multi-étages permet de disposer de grandes surfaces d'échange, qui facilitent la déshydrogénocondensation et l'évacuation du gaz formé contenant l'hydrogène et les vapeurs de volatils. En multipliant les étages, on accroît d'autant cette surface d'échange qui peut, également, être augmentée en jouant sur le diamètre de la colonne et des plateaux de séparation **40** à **43**.

Un tel réacteur A permet, également, d'optimiser la surface libre de départ de l'hydrogène, ce qui permet d'éviter un moussage rédhibitoire. Il offre également la possibilité de maîtriser, avec précision, le taux de substitution des SiH du POS (I) par les fonctionnalités $Fo_1$, en prévoyant un asservissement tel que présenté ci-dessus.

Le fait que ce réacteur A soit peu encombrant, de structure simple et peu onéreux, constitue également un avantage significatif.

Enfin, la sécurité est également optimisée grâce au fait que ce réacteur permet le transfert du POS (II) dans le réacteur B, à des fins de neutralisation par hydrosilylation, dès lors que le taux de transformation ou de substitution asymptotique en $Fo_1$ est atteint.

Dans le présent exemple, le réacteur B est un réacteur discontinu d'hydrosilylation, désigné par la référence **21.** Il s'agit d'une cuve comportant des moyens d'agitation **22,** formés e. g. par un agitateur à hélice. Le fond de ce réacteur **21** est relié à une canalisation **23** permettant la récupération du POS (III) une fois formé.

Dans sa partie supérieure, ce réacteur **21** comporte des moyens **24** de récupération des évents gazeux, constitués par une colonne communiquant avec l'intérieur du réacteur **21** et comportant, de préférence, un équipement **25** de traitement des évents pour séparer l'hydrogène des autres gaz. Ces derniers sont constitués par les vapeurs des réactifs volatils, qui peuvent être le composé à hydrogène mobile (alcool e. g.) et le composé insaturé à hydrosilyler (e. g. alcène).

A l'instar des moyens **18** du réacteur A, cet équipement **25** est constitué par au moins un - en l'espèce un - condenseur des vapeurs de volatils. Ce condenseur est, par exemple, un serpentin (représenté symboliquement sur la figure) parcouru par un flux de fluide frigorigène, également indiqué sur le dessin. Les condensats peuvent être récupérés dans le fond **25** du condenseur pour être stockés et/ou recyclés.

Dans le présent mémoire, R représente un reste hydrocarboné consistant dans un radical alkyle, linéaire ou ramifié, ayant de 1 à 15 atomes de carbone et, de préférence, ayant de 1 à 6 atomes de carbone.

Dans le cas particulier où le réactif à hydrogène mobile est un alcool, la fonctionnalité $Fo_1$ est un alcoxyle et dans le cas où le composé insaturé à hydrosilyler est une oléfine, $Fo_2$ est un radical hydrocarboné fonctionnel répondant à la même définition que celle donnée pour W dans la formule (II) du motif constituant les POS fonctionnalisés, tels que décrits dans le WO 96/16 125. Les fonctionnalités $Fo_1$ sont par exemple le méthoxyle, l'éthoxyle et l'(iso)propoxyle. Les fonctionnalités $Fo_2$ sont par exemple : un radical alkyle (i') consistant dans l'octyle, le dodécyle, l'undécyle et le tridécyle; un radical alkényle (2i') consistant dans l'hexényle et le dodécényle ; un radical cycloaliphatique insaturé (3i') consistant dans le cyclohexényle, le méthyl-1 cyclohexène-1 yle, éventuellement relié au silicium par le reste $-CH_2-CH_2$, $-CH_2-CH(CH_3)-$ ou $-(CH_2)_3-$.

En ce qui concerne les produits mis en oeuvre et les produits obtenus par ce procédé, on privilégie ceux tels que divulgués dans la demande de brevet PCT WO 96/16 125.

Pour plus de détails, on précisera que les POS (III) multifonctionnels obtenus par le procédé selon l'invention sont ceux comprenant par molécule :

α) d'une part au moins un motif siloxyle fonctionnel (I) :

$$(R')_a YSi(O)_{\frac{3-a}{2}}$$

où R' est notamment un radical alkyle en $C_1$-$C_6$, Y est un radical alcoxyle en $C_1$-$C_{15}$, de préférence en $C_1$-$C_6$, et a = 0, 1 ou 2;
β) d'autre part, au moins un autre motif siloxyle fonctionnel (II) :

$$(R')_b WSi(O)_{\frac{3-b}{2}}$$

où b = 0, 1 ou 2 et W est un groupe hydrocarboné en $C_2$-$C_{30}$, relié au silicium par une liaison Si-C, choisi parmi les groupes suivants :

(i) un groupe alkyle, linéaire ou ramifié, comprenant au moins 7 atomes de carbone,
(2i) un groupe alkényle en $C_2$-$C_{20}$, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en α et avantageusement constitué par un étheroxyde ou un thioéther,
(3i) un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe (s) alkyle(s) linéaire(s) ou ramifiée(s) en $C_1$-$C_3$, ledit groupe cyclique étant éventuellement relié au silicium par l'intermédiaire d'un radical alkylène, linéaire ou ramifié en $C_2$-$C_{10}$,
(4i) un groupe mercaptoalkyle de formule

$$_R^1_S_A \qquad (4i)$$

dans laquelle

* $R^1$ représente un radical alkylène en $C_2$-$C_{10}$, linéaire ou ramifié, comprenant éventuellement au moins un hétéroatome oxygéné ou un radical alkylène-cycloalkylène dont la partie alkylène a la même définition que celle donnée juste ci-avant et la partie cyclique comporte 5 à 10 atomes de carbone et est éventuellement substituée par un ou deux groupe(s) alkyle(s) linéaire(s) ou ramifié(s) en $C_1$-$C_3$,
* A correspond :

→ soit à l'hydrogène,
→ soit à un groupement M masquant relié à S par une liaison labile dans des conditions données et permettant le remplacement de M par H ou la création d'une espèce active -$R^1$- S-;

(5i) un groupe comprenant une entité polysulfurique et répondant à la formule suivante :

$$_R^2\ _(_S_)_x_\ R^3 \qquad (5i)$$

avec

* x = 1 à 6,
* $R^2$ ayant la définition que $R^1$ supra,
* $R^3$ est un alkyle en $C_1$-$C_{10}$ linéaire ou ramifié,

(6i) un groupe comportant au moins un cycle, dont au moins l'un des éléments est un atome de soufre, et répondant aux formules ci-dessous :

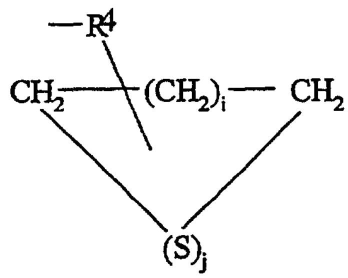

ou

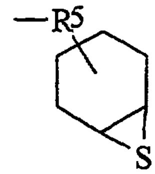

dans lesquelles

* i = 0, 1 ou 2 et j = 1 à 6
* les substituants $R^4$ et $R^5$ sont des radicaux divalents tels que définis supra pour $R^1$,

(7i) un groupe sulfoxyde de formule:

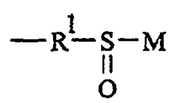 (7i)

dans laquelle le symbole $R^1$ et M ont les définitions données ci-avant pour la formule (4i) ;

y) et éventuellement au moins un motif (III) :

$$(R')_c(H)_dSi(O)_{\frac{4-(c+d)}{2}}$$

où c = 0, 1, 2 ou 3, d = 0 ou 1 et c + d ≤ 3

Pour en révenir à la conduite du procédé selon l'invention, on précisera que, s'agissant du réactif à hydrogène mobile, on privilégie les alcools en $C_1$-$C_{15}$, de préférence en $C_1$-$C_6$. Cela n'exclut pas pour autant la mise en oeuvre de leurs correspondants thiols.

S'agissant du composé insaturé précurseur de $Fo_2$, il est sélectionné parmi les composés de structure appropriée capables de conduire par hydrosilylation aux fonctionnalités correspondant aux groupes (i) à (7i) définis supra.

De préférence, les composés insaturés précurseurs sont sélectionnés parmi les oléfines capables de conduire aux fonctionnalités $Fo_2$ choisies parmi les groupes (i), (2i) et (3i) définis supra.

En pratique, le catalyseur est à base de platine. Il peut s'agir, par exemple, de platine au degré d'oxydation 0, tel que le catalyseur de Karstedt, mais également de platine aux degrés d'oxydation II ou IV. Une autre alternative est d'utiliser des catalyseurs au platine supportés sur des charges minérales, telles que e. g. le noir de carbone, la silice, l'alumine.

A titre d'exemple de mise en oeuvre du procédé selon l'invention dans le dispositif décrit ci-dessus, on peut citer celui dont les conditions opératoires sont les suivantes :

1. PRODUITS MIS EN OEUVRE :

- POS (I) de départ =

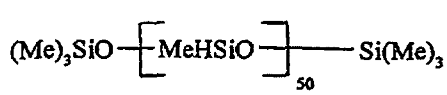

- Réactif fonctionnel à hydrogène mobile (HXR) = éthanol

- Catalyseur = Karstedt à 10 % de platine
- Composé insaturé - Alcène = octène
- POS (II) intermédiaire =

$$(Me)_3SiO-\left[MeHSiO\right]_{15}-\left[Me(CH_3CH_2O)SiO\right]_{35}-Si(Me)_3$$

- POS (III) final =

$$(Me)_3SiO-\left[MeC_8H_{15}SiO\right]_{15}-\left[Me(CH_3CH_2O)SiO\right]_{35}-Si(Me)_3$$

2. PARAMETRES OPERATOIRES :

- débit alimentation en POS (I) 3,91 kg/h
- débit alimentation éthanol + catalyseur 3,92 kg/h
- concentration platine dans l'éthanol 24 ppm
- température entrée POS (I) 46 °C
- température entrée éthanol + catalyseur 72 °C
- température masse pied du réacteur A 70 °C
- débit gazeux 0,910 $m^3$
- degré éthoxylation 0,657 *
- quantité octène employé (pour 10 heures de marche du réacteur A) 34,6 kg

3. FONCTIONNEMENT:

Le POS (I), d'une part, et l'éthanol + le catalyseur au platine, d'autre part, sont introduits dans le compartiment **5** par les canalisations **11** et **12** respectivement. Les débits d'alimentation sont précisés ci-dessus.
La réaction de déshydrogénocondensation intervient dans le compartiment principal **5** avec dégagement d'hydrogène et de volatils qui passent dans la chambre haute **3** par l'intermédiaire du tube **13.** Les volatils sont condensés par le condenseur **18** et récupérés par la canalisation **20,** puis recyclés en les acheminant dans le compartiment principal **5.** L'hydrogène, séparé des volatils condensables, s'échappe par la canalisation **19** et est récupéré.
Après une certaine durée d'alimentation, le milieu réactionnel liquide atteint son niveau de trop-plein dans le compartiment **5.** Ce niveau correspond à une certaine durée de séjour, égale en l'espèce à 3 min 30 s et se déverse dans le compartiment inférieur **6.** Le volume de débordement liquide du compartiment **5** est de 470 ml, tandis que, pour les trois autres compartiments (étages) **6, 7, 8,** ce volume est de 630 ml. Le système de déversement en cascade du milieu réactionnel liquide se poursuit dans les compartiments inférieurs **7** et **8** et on recueille, in fine dans le culot **9,** le POS (II) dont le taux de transformation est de 0,66. Ce taux est régulé grâce à un système d'asservissement comprenant un capteur à hydrogène et une unité de calcul déterminant en continu le taux de transformation, ce qui permet de le réguler en jouant sur les débits en cours de fonctionnement. On pourrait également régler les hauteurs de débordement des plateaux **40** à **43.**
Le POS (II) ainsi obtenu est transféré en continu par la canalisation **10** dans le réacteur B, pour être soumis à l'hydrosilylation le rendant inoffensif et le transformant en POS (III). L'éthanol et l'octène volatilisés sont condensés puis récupérés et éventuellement recyclés grâce aux moyens **24.**
On récupère le POS (III) par vidange du réacteur **21** à l'aide de la canalisation **23.**

## Revendications

1. Procédé de fabrication en continu ou en semi-continu de polyorganosiloxanes (POS) multifonctionnels (III), à partir de POS (I) comprenant des groupements SiH, et selon un mécanisme réactionnel faisant intervenir une déshy-

* sur 100 groupements SiH initiaux, 65,7 se sont transformés en groupements SiOEt.

drogénocondensation permettant la fonctionnalisation par la fonctionnalité ($Fo_1$) et une hydrosilylation d'au moins un composé insaturé précurseur d'une fonctionnalité ($Fo_2$) sur le POS (III),

→ ledit procédé faisant appel pour sa mise en oeuvre à un dispositif de fabrication industrielle adapté grâce auquel les opérations suivantes sont réalisées :

- alimenter en continu au moins un réacteur A continu avec :
  - au moins un POS (I) à groupement SiH,
  - au moins un réactif (HXR) fonctionnel à hydrogène mobile consistant dans un alcool et/ou un thiol (X = O ou S), ledit réactif pouvant être en excès par rapport à (I),
  - et un catalyseur comprenant un produit choisi parmi les métaux de transition,

  ledit réacteur A étant le siège d'une déshydrogénocondensation conduisant, notamment :

  - à un POS (II) comprenant des groupements SiH résiduels et des groupements $SiFo_1$ ($Fo_1$ = XR),
  - à du réactif HXR,
  - et à un gaz comportant de l'hydrogène et, éventuellement, du réactif HXR gazeux,
- évacuer et récupérer en continu, hors du réacteur A, du gaz contenant de l'hydrogène dès sa formation, et éventuellement, dans le cas où le produit par la déshydrogénocondensation comprend, outre l'hydrogène, du HXR sous forme vapeur, le soumettre à un traitement de séparation de l'$H_2$ des vapeurs d'HXR,
- éventuellement recueillir le milieu réactionnel liquide dès lors que celui-ci contient du POS II à groupements $SiH/SiFo_1$ et le catalyseur,
- transférer ledit milieu réactionnel liquide, du réacteur A à au moins un réacteur B d'hydrosilylation d'au moins un composé fonctionnel insaturé par les SiH résiduels du POS (II), de façon à obtenir le POS (III) à groupements $SiFo_1$ et $SiFo_2$,
- laisser se dérouler l'hydrosilylation susvisée, et
- récupérer le POS (III) à groupements $SiFo_1/SiFo_2$ ainsi formé,

→ ledit procédé étant **caractérisé en ce que** le dispositif pour la mise en oeuvre présente les particularités suivantes :

- il comprend au moins un réacteur A qui comprend une enceinte (1) comportant :
  - d'une part, au moins une chambre basse réactionnelle **(2)** pourvue d'au moins un plateau **(40)** constituant le fond d'un compartiment principal **(5)** destiné à servir de siège à au moins une partie de la déshydrogénocondensation,
  - et, dautre part, une chambre haute (**3**) appartenant aux moyens d'évacuation et de récupération rapides du gaz et contenant les éventuels moyens **(18)** de séparation de l'hydrogène,
- le compartiment principal (**5**) est celui dans lequel débouche la (ou les) conduit(s) d'alimentation (**11, 12)** en réactifs de départ consistant dans le POS (I), le réactif HXR et le catalyseur,
- ledit compartiment (**5**) est équipé d'au moins un organe (**13**) de type trop-plein déterminant un niveau donné pour le milieu réactionnel liquide dans le compartiment (**5**), ledit trop-plein (**13**) mettant en communication ce dernier avec le niveau inférieur de la chambre basse **(2),** là ou se situe(nt) une (ou des) canalisation(s) de transfert (**10**) du POS (II) à groupements $SiH/SiFo_1$ d'un réacteur A dans au moins un réacteur B d'hydrosilylation pourvu :
  - de moyens de récupération (**24**) des évents gazeux pouvant être combinés à un équipement (**25**) de traitement des évents pour séparer l'hydrogène des autres gaz,
  - et éventuellement de moyens d'agitation (**22**) du milieu réactionnel d'hydrosilylation,
- et ce compartiment principal (**5**) est en relation, par sa partie supérieure, avec la chambre haute (**3**).

**2.** Procédé selon la revendication 1, **caractérisé en ce que** le dispositif pour la mise en oeuvre présente les particularités suivantes :

- la chambre basse (**2**) de A est à multi-étages et comporte au moins un autre étage inférieur en plus de celui correspondant au compartiment principal (**5**), chaque étage inférieur comprenant un fond formé par au moins un plateau (**41**, **42**, **43**) définissant, avec le fond de l'étage vicinal supérieur, un compartiment (**6**, **7**, **8**) et comprenant au moins un organe de trop-plein **(13')** permettant le réglage du niveau de liquide, chaque compartiment inférieur (**6**, **7**, **8**) étant destiné à être alimenté en milieu réactionnel liquide par l'intermédiaire du trop-plein **(13, 13')** de l'étage immédiatement supérieur,
- et le fond (**43**) de l'étage le plus bas communique, par son trop-plein (**13'**), avec le culot (**9**) du réacteur A, de manière à permettre le recueil du POS (II).

**3.** Procédé selon la revendication 1 ou 2, **caractérisé en ce que** le dispositif pour la mise en oeuvre présente les particularités suivantes :

- les réacteurs A et B comprennent chacun des moyens de séparation de l'hydrogène des autres évents gazeux,
- et ces moyens sont constitués par au moins un condenseur **(18, 25**) de vapeurs de volatils.

**4.** Procédé selon l'une quelconque des revendications 1 à 3, **caractérisé en ce que** le dispositif pour la mise en oeuvre comprend des moyens de détermination en continu du taux de substitution des SiH, de façon à permettre la régulation de celui-ci, lesdits moyens pouvant être essentiellement constitués par au moins un compteur à hydrogène associé à une unité de calcul.

**5.** Procédé selon la revendication 4, **caractérisé :**

- **en ce que** l'on mesure et/ou calcule le taux de substitution des SiH par Fo1,
- et **en ce que** l'on effectue le transfert du POS (II) du réacteur A de déshydrogénocondensation au(x) réacteur(s) B d'hydrosilylation, dès lors que le taux de substitution des SiH par $Fo_1$, exprimé en % molaire, est supérieur ou égal à 45.

**6.** Procédé selon l'une quelconque des revendications 1 à 5, **caractérisé en ce que** le dispositif pour la mise en eouvre comprend plusieurs réacteurs B fonctionnant, soit en semi-continu (séquences réaction/vidange alternées), soit en continu, ou bien encore un seul réacteur B conçu pour fonctionner en continu.

**7.** Procédé selon l'une quelconque des revendications 1 à 5, **caractérisé en ce que** l'on alimente le réacteur A simultanément en POS (I) à SiH et en réactif HXR, le catalyseur étant compris dans le POS (I) et/ou le réactif HXR.

**8.** Procédé selon l'une quelconque des revendications 1 à 5, **caractérisé en ce que** l'on prévoit un préchauffage d'au moins l'un des réactifs de départ : POS(I), HXR et catalyseur, à une température comprise entre 30 et 100°C.

**9.** Procédé selon l'une quelconque des revendications 1 à 8, **caractérisé :**

- **en ce que** les POS (III) multifonctionnels sont ceux comprenant par molécule :

α) d'une part au moins un motif siloxyle fonctionnel (I):

$$(R')_aYSi(O)_{\frac{3-a}{2}}$$

où R' un radical alkyle en $C_1$-$C_6$, Y est un radical alcoxyle en $C_1$-$C_{15}$ et a = 0, 1 ou 2 ;

β) d'autre part, au moins un autre motif siloxyle fonctionnel (II) :

$$(R')_bWSi(O)_{\frac{3-b}{2}}$$

où b = 0, 1 ou 2 et W est un groupe hydrocarboné en $C_2$-$C_{30}$, relié au silicium par une liaison Si-C, choisi parmi les groupes suivants :

(i) un groupe alkyle, linéaire ou ramifié, comprenant au moins 7 atomes de carbone,
(2i) un groupe alkényle en $C_2$-$C_{20}$, linéaire ou ramifié, comportant une ou plusieurs doubles liaisons dans la (ou les) et/ou en extrémité(s) de chaîne(s), lesdites doubles liaisons pouvant être conjuguées

et/ou associées à au moins un groupement activateur situé en α et avantageusement constitué par un étheroxyde ou un thioéther,
(3i) un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe(s) alkyle(s) linéaire(s) ou ramifiée(s) en $C_1$-$C_3$, ledit groupe cyclique étant éventuellement relié au silicium par l'intermédiaire d'un radical alkylène, linéaire ou ramifié en $C_2$-$C_{10}$,
(4i) un groupe mercaptoalkyle de formule

$$—R^1—S—A \qquad (4i)$$

dans laquelle

* $R^1$ représente un radical alkylène en $C_2$-$C_{10}$, linéaire ou ramifié, comprenant éventuellement au moins un hétéroatome oxygéné ou un radical alkylène-cycloalkylène dont la partie alkylène a la même définition que celle donnée juste ci-avant et la partie cyclique comporte 5 à 10 atomes de carbone et est éventuellement substituée par un ou deux groupe(s) alkyle(s) linéaire(s) ou ramifié(s) en $C_1$-$C_3$,
* A correspond :
  - → soit à l'hydrogène,
  - → soit à un groupement M masquant relié à S par une liaison labile dans des conditions données et permettant le remplacement de M par H ou la création d'une espèce active -$R^1$- S·;

(5i) un groupe comprenant une entité polysulfurique et répondant à la formule suivante :

$$—R^2—(—S—)_x—R^3 \qquad (5i)$$

avec

* x = 1 à 6,
* $R^2$ ayant la définition que $R^1$ supra,
* $R^3$ est un alkyle en $C_1$-$C_{10}$ linéaire ou ramifié,

(6i) un groupe comportant au moins un cycle, dont au moins l'un des éléments est un atome de soufre, et répondant aux formules ci-dessous :

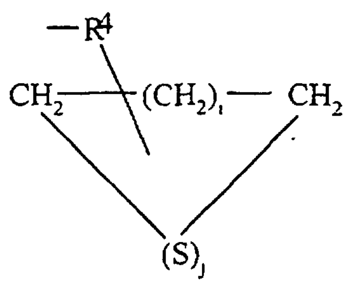

ou

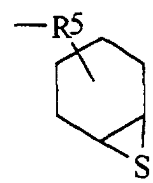

dans lesquelles

* i = 0, 1 ou 2 et j = 1 à 6
* les substituants $R^4$ et $R^5$ sont des radicaux divalents tels que définis supra pour $R^1$,

(7i) un groupe sulfoxyde de formule :

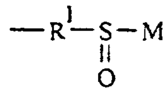 (7i)

dans laquelle le symbole $R^1$ et M ont les définitions données ci-avant pour la formule (4i) ;
γ) et éventuellement au moins un motif (III) :

$$(R')_c(H)_dSi(O)_{\frac{4-(c+d)}{2}}$$

où c = 0, 1, 2 ou 3, d = 0 ou 1 et c + d ≤ 3 ;

- **en ce que** le réactif à hydrogène mobile est un alcool ROH avec R = alkyle en $C_1$-$C_{15}$,
- et **en ce que** le catalyseur est à base de platine.

## Claims

**1.** Process for the continuous or semi-continuous manufacture of multifunctional polyorganosiloxanes (POSs) (III), from POSs (I) comprising SiH groups, and according to a reaction mechanism involving a dehydrogenocondensation allowing functionalization via the functionality ($Fo_1$) and a hydrosilylation of at least one unsaturated compound that is a precursor of a functionality ($Fo_2$) on the POS (III),

→ the said process involving for its implementation an adapted industrial manufacturing device by means of which the following operations are performed:

- continuously feeding at least one continuous reactor A with:
  - at least one POS (I) containing an SiH group,
  - at least one functional reagent (HXR) containing a labile hydrogen consisting of an alcohol and/or a thiol (X = O or S), the said reagent possibly being in excess relative to (I), and
  - a catalyst comprising a product chosen from transition metals,

  the said reactor A being the site of a dehydrogenocondensation giving, especially:

  - a POS (II) comprising residual SiH groups and groups $SiFo_1$ ($Fo_1$ = XR),
  - reagent HXR, and
  - a gas comprising hydrogen and, optionally, gaseous reagent HXR,

- continuously discharging and recovering, out of the reactor A, gas containing hydrogen as soon as it is formed, and optionally, when the product of the dehydrogenocondensation comprises, besides hydrogen, HXR in vapour form, subjecting it to a treatment to separate the $H_2$ from the HXR vapours,
- optionally recovering the liquid reaction medium provided that the said medium contains POS II containing SiH/$SiFo_1$ groups and the catalyst,
- transferring the said liquid reaction medium from the reactor A to at least one reactor B for hydrosilylation of at least one unsaturated functional compound via the residual SiH groups of the POS (II), so as to obtain the POS (III) containing $SiFo_1$ and $SiFo_2$ groups,
- leaving the abovementioned hydrosilylation to proceed, and
- recovering the POS (III) containing $SiFo_1$/$SiFo_2$ groups thus formed,

→ the said process being **characterized in that** the device for carrying it out has the following particular features:

- it comprises at least one reactor A which comprises a chamber (1) comprising:
  - firstly, at least one bottom reaction chamber (2) provided with at least one plate (40) constituting the base of a main compartment (5) intended to serve as the site for at least some of the dehydrogenocondensation, and

- secondly, a top chamber (3) belonging to the means for the rapid discharge and recovery of the gas and containing the optional means (18) for separating out the hydrogen,

• the main compartment (5) is that into which emerge(s) the pipe(s) (11, 12) for feeding in starting reagents consisting of the POS (I), the reagent HXR and the catalyst,
• the said compartment (5) is equipped with at least one member (13) of overflow type that determines a given level for the liquid reaction medium in the compartment (5), the said overflow (13) placing the said compartment in communication with the lower level of the bottom chamber (2), where there is (are) one . (or more) pipe(s) (10) for transferring the POS (II) containing SiH/$SiFo_1$ groups from a reactor A into at least one hydrosilylation reactor B provided with:

  - means (24) for recovering the vent gases, which may be combined with equipment (25) for treating the vent gases to separate out the hydrogen from the other gases, and
  - optionally means (22) for stirring the hydrosilylation reaction medium,

• and this main compartment (5) is in connection, via its top part, with the top chamber (3).

**2.** Process according to claim 1, **characterized in that** the device for carrying it out has the following particular features:

• the bottom chamber (2) of A is a multi-stage chamber and comprises at least one other lower stage in addition to that corresponding to the main compartment (5), each lower stage comprising a base formed by at least one plate (41, 42, 43) defining, with the base of the upper vicinal stage, a compartment (6, 7, 8) and comprising at least one overflow member (13') for controlling the level of liquid, each lower compartment (6, 7, 8) being intended to be fed with liquid reaction medium via the overflow (13, 13') of the stage that is immediately above it, and
• the base (43) of the bottom-most stage communicates, via its overflow (13'), with the base (9) of the reactor A, so as to allow the POS (II) to be collected.

**3.** Process according to claim 1 or 2, **characterized in that** the device for carrying it out has the following particular features:

• the reactors A and B each comprise means for separating out the hydrogen from the other vent gases, and
• these means consist of at least one volatile vapour condenser (18, 25).

**4.** Process according to any one of claims 1 to 3, **characterized in that** the device for carrying it out comprises means for continuously determining the degree of substitution of the SiH groups, so as to allow the said degree to be controlled, the said means possibly consisting essentially of at least one hydrogen counter combined with a computing unit.

**5.** Process according to claim 4, **characterized:**

• **in that** the degree of substitution of the SiH groups with $Fo_1$ is measured and/or calculated, and
• **in that** the POS (II) is transferred from the dehydrogenocondensation reactor A to the hydrosilylation reactor (s) B, as soon as the degree of substitution of the SiH groups with $Fo_1$, expressed as a molar percentage, is greater than or equal to 45.

**6.** Process according to any one of claims 1 to 5, **characterized in that** the device for carrying it out comprises several reactors B functioning either semi-continuously (alternating reaction/discharge sequences) or continuously, or alternatively a single reactor B designed to operate continuously.

**7.** Process according to any one of claims 1 to 5, **characterized in that** the reactor A is simultaneously fed with POS (I) containing SiH and with reagent HXR, the catalyst being included in the POS (I) and/or the reagent HXR.

**8.** Process according to any one of claims 1 to 5, **characterized in that** a preheating of at least one of the starting reagents: POS(I), HXR and catalyst, to a temperature of between 30 and 100°C, is included.

**9.** Process according to any one of claims 1 to 8, **characterized**

- **in that** the multifunctional POSs (III) are those comprising, per molecule:

α) firstly, at least one functional siloxyl unit (I) :

$$(R')_a YSi(O)_{\frac{3-a}{2}}$$

in which R' is a $C_1$-$C_6$ alkyl radical, Y is a $C_1$-$C_{15}$ alkoxy radical and a = 0, 1 or 2;
β) secondly, at least one other functional siloxyl unit (II):

$$(R')_b WSi(O)_{\frac{3-b}{2}}$$

in which b = 0, 1 or 2 and W is a $C_2$-$C_{30}$ hydrocarbon-based group, linked to the silicon via an Si-C bond, chosen from the following groups:

(i) a linear or branched alkyl group containing at least 7 carbon atoms,
(2i) a linear or branched $C_2$-$C_{20}$ alkenyl group comprising one or more double bonds in and/or at the end(s) of the chain(s), the said double bonds possibly being conjugated and/or combined with at least one activating group located in an α position and advantageously consisting of an oxide ether or a thio ether,
(3i) an unsaturated aliphatic monocyclic or bicyclic group containing 5 to 20 cyclic carbon atoms and one or two ethylenic double bond(s) in the ring, that are optionally substituted with one or two linear or branched $C_1$-$C_3$ alkyl group(s), the said cyclic group optionally being linked to the silicon via a linear or branched $C_2$-$C_{10}$ alkylene radical,
(4i) a mercaptoalkyl group of formula

$$_R^1_S_A \qquad (4i)$$

in which

* $R^1$ represents a linear or branched $C_2$-$C_{10}$ alkylene radical optionally comprising at least one oxygen hetero atom or an alkylene-cycloalkylene radical in which the alkylene portion has the same definition as that given just above and the cyclic portion contains 5 to 10 carbon atoms and is optionally substituted with one or two linear or branched $C_1$-$C_3$ alkyl group(s),
* A corresponds:

→ either to hydrogen,
→ or to a masking group M linked to S via a bond that is labile under given conditions and allowing the replacement of M with H or the creation of an active species $-R^1-S-$;

(5i) a group comprising a polysulphuric species and corresponding to the following formula:

$$_R^2_(_S_)_x_R^3 \qquad (5i)$$

with

* x = 1 to 6,
* $R^2$ having the same definition as $R^1$ above,
* $R^3$ is a linear or branched $C_1$-$C_{10}$ alkyl,

(6i) a group comprising at least one ring, at least one of the members of which is a sulphur atom, and corresponding to the formulae below:

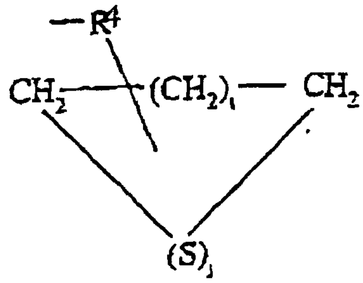

or

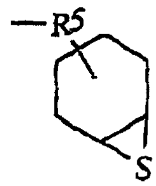

in which

- * i = 0, 1 or 2 and j = 1 to 6
- * the substituents $R^4$ and $R^5$ are divalent radicals as defined above for $R^1$,

(7i) a sulphoxide group of formula:

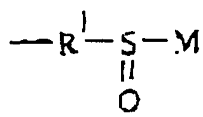

(7i)

in which the symbol $R^1$ and M have the definitions given above for formula (4i);

γ) and optionally at least one unit (III):

$$(R')_c(H)_dSi(O)_{\frac{4-(c+d)}{2}}$$

in which c = 0, 1, 2 or 3, d = 0 or 1 and c + d ≤ 3;

- **in that** the reagent containing a labile hydrogen is an alcohol ROH in which R = $C_1$-$C_{15}$ alkyl, and
- **in that** the catalyst is platinum-based.

**Patentansprüche**

**1.** Verfahren zur kontinuierlichen oder halb-kontinuierlichen Herstellung von multifunktionellen Polyorganosiloxanen (POS) (III) ausgehend von POS (I), umfassend Gruppen SiH, und gemäß einem Reaktionsmechanismus, der eine Dehydrogenokondensation einbezieht, die die Funktionalisierung durch die Funktionalität ($Fo_1$) und eine Hydrosilylierung von mindestens einer ungesättigten Verbindung als Vorläufer einer Funktionalität ($Fo_2$) an dem POS (III) ermöglicht, wobei das genannte Verfahren auf die Verwendung einer angepaßten Vorrichtung zur industriellen Fabrikation zurückgreift, wodurch die folgenden Arbeitsgänge realisiert werden:

· kontinuierliche Speisung von mindestens einem kontinuierlichen Reaktor A mit:

- mindestens einem POS (I) mit Gruppen SiH,
- mindestens einem für beweglichen Wasserstoff funktionellen Reaktanden (HXR), bestehend aus einem Alkohol und/oder einem Thiol (X = O oder S), wobei der genannte Reaktand im Verhältnis zu (I) im Überschuß eingesetzt werden kann, und
- einem Katalysator, umfassend ein Produkt, das unter den Übergangsmetallen ausgewählt wird,

wobei der genannte Reaktor A der Ort für eine Dehydrogenokondensation ist, die insbesondere führt zu:

- einem POS (II), umfassend restliche Gruppen SiH und Gruppen $SiFo_1$ ($Fo_1$ = XR),
- dem Reaktanden HXR, und
- zu einem Gas, das Wasserstoff und gegebenenfalls den gasförmigen Reaktanden HXR umfaßt,

· Evakuieren und kontinuierliche Gewinnung außerhalb des Reaktors A von Gas, enthaltend Wasserstoff von seiner Bildung an und gegebenenfalls in dem Fall, wo das Gas durch Dehydrogenokondensation entstanden ist, umfassend außer dem Wasserstoff HXR in Form von Dampf, der einer Behandlung zur Trennung des Wasserstoffs von dem Dampf aus HXR unterzogen wird,
· gegebenenfalls Sammeln des flüssigen Reaktionsmediums, sobald dieses POS II mit Gruppen $SiH/SiFo_1$ und den Katalysator enthält,
· Überführen des genannten flüssigen Reaktionsmediums vom Reaktor A zu mindestens einem Reaktor B der Hydrosilylierung von mindestens einer ungesättigten Verbindung, funktionalisiert durch restliche Gruppen SiH von POS (II), so daß man das POS (III) mit Gruppen $SiFo_1$ und $SiFo_2$ erhält,
· Ablaufen lassen der oben angegebenen Hydrosilylierung, und
· Gewinnung des auf diese Weise gebildeten POS (III) mit Gruppen $SiFo_1/SiFo_2$,

**dadurch gekennzeichnet, daß** die für die Durchführung eingesetzte Vorrichtung die folgenden Besonderheiten aufweist:

· sie umfaßt mindestens einen Reaktor A, der einen Behälter (1) umfaßt, enthaltend:

. einerseits mindestens eine untere Reaktionskammer (2), versehen mit mindestens einer Platte (40), die den Boden eines Hauptabteiles (5) bildet, das dazu vorgesehen ist, mindestens einem Teil der Dehydrogenokondensation als Ort zu dienen, und
. andererseits eine obere Kammer (3), die zu den Mitteln zur Evakuierung und zur schnellen Gewinnung des Gases gehört und die gegebenenfalls Mittel (18) zur Abtrennung des Wasserstoffs enthält,

· das Hauptabteil (5) ist dasjenige, in das die Speiseleitung(en) (11, 12) für die Ausgangs-Reaktanden einmünden, die aus dem POS (I), dem Reaktanden HXR und dem Katalysator bestehen,
· das genannte Abteil (5) ist mit mindestens einem Organ (13) vom Typ "Überlauf" ausgestattet, das ein für das flüssige Reaktionsmedium in dem Abteil (5) vorgegebenes Niveau bestimmt, wobei der genannte Überlauf (13), der in Kommunikation mit diesem letzteren steht, das untere Niveau der unteren Kammer (2) bestimmt, wo sich eine oder mehrere Leitung(en) (10) für den Transport des POS (II) mit Gruppen $SiH/SiFo_1$ von einem Reaktor A in mindestens einen Reaktor B befinden, der für die Hydrosilylierung vorgesehen ist:

- Mittel zur Gewinnung (24) der gasförmigen Abzugsprodukte können mit einer Ausrüstung (25) zur Behandlung der Abzugsprodukte, um den Wasserstoff von den anderen Gasen zu trennen, und
- gegebenenfalls mit Mitteln zum Rühren (22) des Reaktionsmediums der Hydrosilylierung kombiniert sein,

· und dieses Hauptabteil (5) steht in seinem oberen Teil mit der oberen Kammer (3) in Verbindung.

**2.** Verfahren nach Anspruch 1, **dadurch gekennzeichnet, daß** die für die Durchführung eingesetzte Vorrichtung die folgenden Besonderheiten aufweist:

· die untere Kammer (2) von A besteht aus mehreren Etagen und umfaßt mindestens eine weitere zusätzliche untere Etage zu derjenigen, die dem Hauptabteil (5) entspricht, wobei jede untere Etage einen Boden umfaßt, gebildet durch mindestens eine Platte (41, 42, 43), die mit dem Boden der oberen benachbarten Etage ein Abteil (6, 7, 8) definiert, und die mindestens ein Überlauf-Organ (13') umfaßt, das die Regulierung des flüssigen Niveaus ermöglicht, und wobei jedes untere Abteil (6, 7, 8) dazu vorgesehen ist, über das Zwischenstück des Überlaufs (13, 13') der unmittelbar darüber liegenden Etage mit dem flüssigen Reaktionsmedium gespeist zu werden, und
· der am tiefsten gelegene Boden (43) durch seinen Überlauf (13') mit dem Bodensatz (9) des Reaktors A in Verbindung steht, so daß die Gewinnung des POS (II) ermöglicht wird.

**3.** Verfahren nach Anspruch 1 oder 2, **dadurch gekennzeichnet, daß** die für die Durchführung eingesetzte Vorrichtung die folgenden Besonderheiten aufweist:

· die Reaktoren A und B umfassen jeweils Mittel zur Abtrennung des Wasserstoffs von den anderen Abgasen,

und

- diese Mittel bestehen aus mindestens einem Kondensator (18, 25) für die Dämpfe der flüchtigen Stoffe.

**4.** Verfahren nach irgendeinem der Ansprüche 1 bis 3, **dadurch gekennzeichnet, daß** die für die Durchführung eingesetzte Vorrichtung Mittel zur kontinuierlichen Bestimmung des Substitutionsgrades der SiH umfaßt, so daß dessen Regulierung ermöglicht wird, wobei die genannten Mittel im wesentlichen aus mindestens einem mit einer Recheneinheit verbundenem Wasserstoffmesser bestehen.

**5.** Verfahren nach Anspruch 4, **gekennzeichnet**

- dadurch, daß man den Grad der Substitution der SiH durch $Fo_1$ mißt und/oder berechnet, und
- dadurch, daß man den Transport des POS (II) vom Reaktor A der Dehydrogenokondensation zu dem(n) Reaktor(en) B der Hydrosilylierung durchführt, sobald der Grad der Substitution der SiH durch $Fo_1$, ausgedrückt in Mol-%, höher oder gleich 45 ist.

**6.** Verfahren nach irgendeinem der Ansprüche 1 bis 5, **dadurch gekennzeichnet, daß** die für die Durchführung eingesetzte Vorrichtung mehrere Reaktoren B umfaßt, die entweder halb-kontinuierlich (abwechselnde Vorgänge Reaktion/Entleeren) oder kontinuierlich arbeiten, oder daß nur ein einziger Reaktor B für die kontinuierliche Arbeitsweise vorgesehen ist.

**7.** Verfahren nach irgendeinem der Ansprüche 1 bis 5, **dadurch gekennzeichnet, daß** man den Reaktor A gleichzeitig mit POS (I) mit SiH und mit dem Reaktanden HXR speist, wobei der Katalysator in dem POS (I) und/oder in dem Reaktanden HXR enthalten ist.

**8.** Verfahren nach irgendeinem der Ansprüche 1 bis 5, **dadurch gekennzeichnet, daß** man eine Vorerhitzung von mindestens einem der Ausgangs-Reaktanden POS(I), HXR und Katalysator auf eine Temperatur zwischen 30 °C und 100 °C vorsieht.

**9.** Verfahren nach irgendeinem der Ansprüche 1 bis 8, **dadurch gekennzeichnet, daß** die multifunktionellen POS (III) solche sind, die pro Molekül umfassen:

α) einerseits mindestens eine funktionelle Struktureinheit Siloxyl (I) :

$$(R')_a YSi(O)_{\frac{3-a}{2}}$$

worin R' einen Rest Alkyl mit 1 bis 6 Kohlenstoffatomen darstellt, Y einen Rest Alkoxyl mit 1 bis 15 Kohlenstoffatomen bedeutet und a = 0, 1 oder 2 ist.

β) andererseits mindestens eine andere funktionelle Struktureinheit Siloxyl (II) :

$$(R')_b WSi(O)_{\frac{3-b}{2}}$$

worin b = 0, 1 oder 2 ist und W eine Kohlenwasserstoff-Gruppe mit 2 bis 30 Kohlenstoffatomen darstellt, gebunden an das Silicium durch eine Bindung Si-C, ausgewählt unter den folgenden Gruppen:

(i) einer linearen oder verzweigten Gruppe Alkyl mit mindestens 7 Kohlenstoffatomen,

(2i) einer linearen oder verzweigten Gruppe Alkenyl mit 2 bis 20 Kohlenstoffatomen, umfassend eine oder mehrere Doppelbindungen in der(n) Kette(n) und/oder an dem(n) Ende(n) der Kette, wobei die genannten Doppelbindungen mit mindestens einer aktivierenden Gruppe, die sich in α befindet und vorteilhafterweise aus einem Etheroxid oder einem Thioether besteht, konjugiert und/oder assoziiert sein können,

(3i) einer ungesättigten, mono- oder bicyclischen aliphatischen Gruppe mit 5 bis 20 cyclischen Kohlenstoffatomen und einer oder zwei ethylenischen Doppelbindung(en) in dem Ring, gegebenenfalls substituiert durch eine oder zwei lineare oder verzweigte Gruppe(n) Alkyl mit 1 bis 3 Kohlenstoffatomen, wobei die genannte cyclische Gruppe gegebenenfalls über das Zwischenteil eines linearen oder verzweigten Restes Alkylen mit 2 bis 10 Kohlenstoffatomen an das Silicium gebunden ist,

(4i) einer Gruppe Mercaptoalkyl der Formel

$$-R^1\text{-S-A} \qquad (4i)$$

in der

- * $R^1$ einen linearen oder verzweigten Rest Alkylen mit 2 bis 10 Kohlenstoffatomen darstellt, gegebenenfalls umfassend mindestens ein Sauerstoff-Heteroatom oder einen Rest Alkylen-Cycloalkylen, dessen Teil Alkylen die gleiche Definition besitzt wie zuvor angegeben und der cyclische Teil 5 bis 10 Kohlenstoffatome umfaßt und gegebenenfalls substituiert ist durch eine oder zwei lineare oder verzweigte Gruppe(n) Alkyl mit 1 bis 3 Kohlenstoffatomen,
- * A entspricht: entweder Wasserstoff oder einer maskierenden Gruppe M, gebunden an S durch eine unter den gegebenen Bedingungen labile Bindung, die den Austausch von M durch H oder die Bildung einer aktiven Art $-R^1$-S ermöglicht;

(5i) einer Gruppe, umfassend eine Polyschwefel-Einheit der folgenden Formel

$$-R^2\text{-(-S-)}_x\text{-}R^3 \qquad (5i)$$

mit

- * x = 1 bis 6,
- * $R^2$ der Definition wie oben bei $R^1$
- * und $R^3$ ist ein linearer oder verzweigter Rest Alkyl mit 1 bis 10 Kohlenstoffatomen,

(6i) einer Gruppe, die mindestens einen Ring umfaßt, bei dem mindestens eines der Elemente ein Schwefelatom ist, und die den folgenden Formeln entspricht:

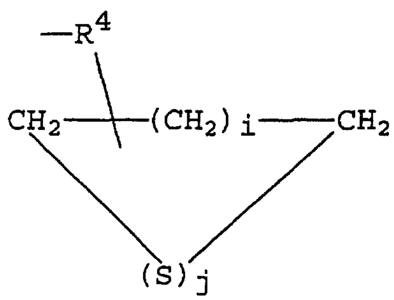

oder

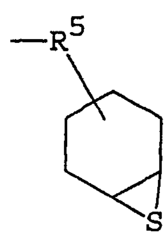

worin

- * i = 0, 1 oder 2 und j = 1 bis 6 sind,
- * die Substituenten $R^4$ und $R^5$ wie weiter oben bei $R^1$ definierte divalente Reste sind,

(7i) einer Sulfoxid-Gruppe der Formel

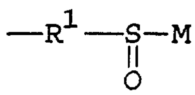

(7i)

in der die Symbole $R^1$ und M die oben bei der Formel (4i) angegebenen Definitionen besitzen;
$\gamma$) und gegebenenfalls mindestens eine Struktureinheit (III) :

$$(R')_c(H)_dSi(O)_{\frac{4-(c+d)}{2}}$$

worin c = 0, 1, 2 oder 3, d = 0 oder 1 und c + d ≤ 3 sind;

- dadurch, daß der Reaktand für beweglichen Wasserstoff ein Alkohol ROH ist, mit R = Alkyl mit 1 bis 15 Kohlenstoffatomen,
- und dadurch, daß der Katalysator auf Platin-Basis beruht.